# NOUVEAU FASCICULE DE BREVET EUROPEEN

(11) **EP 2 878 370 B2**
(45) Date de publication et mention de la décision concernant l'opposition: **03.12.2025**
(45) Mention de la délivrance du brevet: 27.09.2017
(21) Numéro de dépôt: 14306681.9
(22) Date de dépôt: 23.10.2014
(51) Int. Cl.: B01J 37/26, B01J 37/28, B01J 21/04, B01J 23/88, B01J 23/883, B01J 35/10, B01J 37/02, C10G 45/08, C10G 65/04, B01J 37/00

(54) **PROCÉDÉ D'HYDROTRAITEMENT DE GAZOLE METTANT EN OEUVRE UN ENCHAINEMENT DE CATALYSEURS**
Verfahren zur Hydrobehandlung von Diesel mittels einer Sequenz von Katalysatoren
Method for hydrotreating diesel by means of a sequence of catalysts

(30) Priorité: 28.11.2013 FR 1361801
(43) Date de publication de la demande: 03.06.2015
(73) Titulaire: IFP Energies nouvelles, 92500 Rueil-Malmaison (FR)
(72) Inventeur: Roy-Auberger, Magalie, 38300 Nivolas-Vermelle (FR); Guillon, Emmanuelle, 69390 Vourles (FR); Rocher, Philippe, 69510 Soucieu en Jarrest (FR)
(74) Mandataire: IFP Energies nouvelles

(56) Documents cités:
- EP-A1- 0 601 722
- WO-A1-2007/084439
- WO-A1-2008/045550
- FR-A1- 2 972 648
- US-A- 4 902 404
- US-A1- 2010 236 988

## Description

La présente invention se rapporte au domaine des procédés d'hydrotraitement d'une charge de type gazole par mise en oeuvre d'un enchaînement de catalyseurs. L'objectif du procédé est la production de gazole désulfuré et désazoté. Le procédé d'hydrotraitement selon l'invention est particulièrement adapté pour l'hydrotraitement de charges comprenant des teneurs élevées en azote.

Habituellement, un catalyseur d'hydrotraitement de coupes hydrocarbonées a pour but d'éliminer les composés soufrés ou azotés contenus dans celles-ci afin de mettre par exemple un produit pétrolier aux spécifications requises (teneur en soufre, teneur en aromatiques etc..) pour une application donnée (carburant automobile, essence ou gazole, fioul domestique, carburéacteur). La composition et l'utilisation des catalyseurs d'hydrotraitement sont particulièrement bien décrites dans l'article de B. S. Clausen, H. T. Topsøe, et F.E. Massoth, issu de l'ouvrage Catalysis Science and Technology, volume 11 (1996), Springer-Verlag. Les catalyseurs d'hydrotraitement possèdent généralement des fonctions hydrodésulfurantes et hydrogénantes à base de sulfure de métaux des groupes VIB et VIII.

Le durcissement des normes de pollution automobile dans la communauté européenne (Journal Officiel de l'Union européenne, L76, 22 mars 2003, Directive 2003/70/CE, pages L76/10-L76/19) a contraint les raffineurs à réduire très fortement la teneur en soufre dans les carburants diesel et les essences (au maximum 10 parties par million poids (ppm) de soufre au 1^{er} janvier 2009, contre 50 ppm au 1^{er} janvier 2005). Par ailleurs, les raffineurs se trouvent contraints d'utiliser des charges de plus en plus réfractaires aux procédés d'hydrotraitement, d'une part parce que les bruts sont de plus en plus lourds et contiennent par conséquent de plus en plus d'impuretés, et d'autre part du fait de l'augmentation des nombres d'unités de conversion dans les raffineries. En effet, celles-ci génèrent des coupes plus difficiles à hydrotraiter que les coupes directement issues de la distillation atmosphérique du fait des teneurs élevées en composés aromatiques, azotés et soufrés. Ces coupes nécessitent ainsi des catalyseurs possédant des fonctions hydrodésulfurantes et hydrogénantes fortement améliorées par rapport aux catalyseurs traditionnels.

L'ajout d'un composé organique sur les catalyseurs d'hydrotraitement pour améliorer leur activité est maintenant bien connu de l'homme du métier. De nombreux brevets protègent l'utilisation de différentes gammes de composés organiques, tels que les mono, di- ou polyalcools éventuellement éthérifiés (WO96/41848, WO01/76741, US4012340, US3954673, EP601722). Des catalyseurs modifiés avec des monoesters en C2-C14 sont décrits dans les demandes de brevet EP466568 et EP1046424.

D'autres brevets montrent qu'un enchaînement spécifique de catalyseurs dans le même réacteur peut être avantageux.

Ainsi, la demande de brevet US2011/0079542 décrit que le remplacement d'une partie d'un catalyseur d'HDS de référence en tête de lit par un catalyseur d'activité plus basse ne modifie pas les performances du chargement global par rapport à 100% de catalyseur de référence, car sur la première portion du lit catalytique, la réaction se fait sur des espèces soufrés non réfractaires et ne nécessite pas un catalyseur performant.

Le brevet EP 0651041 montre l'intérêt d'enchainer des lits de catalyseurs avec des formes de particules différentes. Le document WO2008/045550 décrit un procédé d'hydrotraitement utilisant un catalyseur massique comprenant un métal du groupe VIII, un métal du groupe VIB et un composant à base de composé organique. Ce document décrit également des enchaînements de catalyseurs dans lesquels au moins un des catalyseurs est un catalyseur massique. Les catalyseurs massiques sont utilisés dans un hydrotraitement de charges contenant des composés azotées.

Le document US2010/0236988 décrit un procédé d'hydrotraitement utilisant un catalyseur comprenant un support et une phase active, ledit catalyseur est imprégné à la fois avec une huile hydrocarbonée et un additif polaire. Ce catalyseur est préparé par séchage, sans calcination ultérieure. Ce document décrit qu'un tel catalyseur séché additivé améliore l'activité catalytique. La présente invention concerne un procédé d'hydrotraitement d'une charge de type gazole par mise en oeuvre d'un enchaînement spécifique d'au moins deux types de catalyseurs différents permettant d'accroitre l'activité globale et la stabilité globale du procédé d'hydrotraitement par rapport à un procédé d'hydrotraitement utilisant en même quantité et dans les mêmes conditions opératoires qu'un seul de ces deux types de catalyseurs.

On entend par hydrotraitement des réactions englobant notamment l'hydrodésulfuration (HDS), l'hydrodéazotation (HDN) et l'hydrogénation des aromatiques (HDA).

Selon le procédé de l'invention, la charge est d'abord mise en contact avec un métalliques. On appellera ce premier type de catalyseur "catalyseur sous forme oxyde" ou "catalyseur calciné".

La charge est ensuite mise en contact avec un deuxième type de catalyseur lequel a été préparé par introduction de phosphore, de la phase active et d'un composé organique contenant de l'oxygène et/ou de l'azote suivie d'une étape de séchage, sans calcination ultérieure. Il est à noter que ce deuxième type de catalyseur ne subit pas de calcination, la phase active ne se trouve alors pas sous sa forme oxyde. On appellera ce deuxième type de catalyseur "catalyseur additivé".

Plus particulièrement, la présente invention concerne un procédé d'hydrotraitement d'une charge hydrocarbonée contenant des composés azotés à une teneur supérieure à 150 ppm poids et ayant une température moyenne pondérée comprise entre 250 et 380°C selon la revendication 1.

On a pu constater que bien que les catalyseurs additivés d'un composé organique aient généralement un pouvoir d'hydrotraitement amélioré par rapport aux catalyseurs non additivés, ces catalyseurs sont plus facilement inhibés par des molécules azotées, et notamment par des molécules azotées basiques contenues dans la charge, que les catalyseurs non additivés. Cette inhibition a comme conséquence une baisse d'activité et de stabilité du catalyseur additivé avec le temps et donc une diminution de leur pouvoir d'hydrotraitement.

La demanderesse a développé un procédé d'hydrotraitement d'une charge de type gazole comprenant un enchaînement de catalyseurs permettant d'effectuer dans un premier temps un hydrotraitement sur un catalyseur sous sa forme oxyde (catalyseur calciné), lequel présente une bonne activité en hydrodésulfuration et en hydrodéazotation. Ce premier type de catalyseur est notamment moins inhibé par les molécules azotés basiques réfractaires et donc plus actif en hydrodéazotation qu'un catalyseur additivé. Ceci permet d'effectuer une hydrodéazotation poussée dans la première étape du procédé selon l'invention et donc de soulager le catalyseur additivé de la deuxième étape qui est mis en contact avec l'effluent sortant de cette première étape. L'hydrotraitement est ensuite poursuivi par la mise en contact de la charge dépourvue d'une grande partie de ses molécules azotées et d'une partie de ses molécules soufrées avec un catalyseur additivé particulièrement actif en HDS, permettant ainsi de finaliser l'hydrodésulfuration profonde. Grâce au fait que la charge est mise en contact avec un catalyseur sous forme oxyde avant la mise en contact avec un catalyseur additivé, le catalyseur additivé est moins inhibé par les molécules azotées et donc plus actif et stable avec le temps. L'enchaînement spécifique permet ainsi de protéger le catalyseur additivé très actif en HDS par un catalyseur sous forme oxyde très actif en HDN, ce qui a comme conséquence une augmentation de l'activité globale et de la stabilité globale de l'enchaînement catalytique par rapport à un système catalytique ne contenant que des catalyseurs additivés. Ainsi, l'activité globale est augmentée car la vitesse volumique horaire (le volume de charge pouvant être traité par temps) peut être augmentée ou, alternativement, on peut utiliser moins de catalyseur pour traiter le même volume de charge. De plus, grâce à l'augmentation de l'activité, la température nécessaire pour atteindre une teneur en soufre souhaitée (par exemple 10 ppm de soufre) peut être baissée. De même, la stabilité globale est augmentée, car la durée de cycle est prolongée.

Le procédé d'hydrotraitement selon l'invention est particulièrement adapté pour l'hydrotraitement de charges comprenant des teneurs élevées en azote organique, telles que des charges issues du craquage catalytique, du coker ou de la viscoréduction.

Le procédé selon la présente invention permet de produire une coupe hydrocarbonée hydrotraitée, c'est-à-dire à la fois débarrassée des éventuels composés azotés, et désulfurée à des teneurs inférieures ou égales à 10 ppm en soufre. Par ppm en soufre (ou en azote) on entend pour toute la suite du texte des ppm en poids rapportés au soufre élémentaire (ou à l'azote élémentaire), quelle que soit la ou les molécules organiques dans lesquelles le soufre (ou l'azote) est engagé. De préférence selon le procédé selon l'invention la conversion en hydrodésulfuration est supérieure à 98%, de préférence supérieure à 99%. L'enchaînement spécifiques des catalyseurs selon le procédé de l'invention permet ainsi d'effectuer un hydrotraitement poussé, et notamment une hydrodésulfuration poussée des gazoles permettant d'obtenir du gazole selon les spécifications (ULSD Ultra Low Sulfur Diesel selon la terminologie anglo-saxonne).

Selon une variante, pour le catalyseur de l'étape a) ou b), le métal du groupe VIB est le molybdène et le métal du groupe VIII est choisi parmi le cobalt, le nickel et le mélange de ces deux éléments.

Selon une variante, pour le catalyseur de l'étape a) ou b), la teneur en métal du groupe VIB est comprise entre 5 et 40% poids d'oxyde de métal du groupe VIB par rapport au poids total du catalyseur, la teneur en métal du groupe VIII est comprise entre 1 et 10% poids d'oxyde de métal du groupe VIII par rapport au poids total du catalyseur et la teneur en phosphore est comprise entre 0,1 et 10 % poids de P₂O₅ par rapport au poids total du catalyseur.

Selon une variante, le catalyseur de l'étape a) ou b) contient en outre au moins un dopant choisi parmi le bore et le fluor et un mélange de bore et de fluor.

Selon une variante, le composé organique est l'un ou plusieurs choisis parmi un acide carboxylique, un alcool, un aldéhyde, un ester, une amine, un acide carboxylique aminé, un alcool aminé, un nitrile ou un amide, de préférence il est l'un ou plusieurs choisis parmi l'éthylène glycol, le glycérol, le polyéthylène glycol (avec un poids moléculaire de 200 à 1500), l'acétophénone, le 2,4-pentanedione, le pentanole, l'acide acétique, l'acide maléique, l'acide oxalique, l'acide tartrique, l'acide formique, l'acide citrique, et le succinate de dialkyle C1-C4, de manière particulièrement préférée il est comprend au moins la combinaison du succinate de dialkyle C1-C4 et de l'acide acétique. Selon une autre variante particulièrement préférée, le composé organique comprend au moins l'acide citrique.

Selon une variante, le catalyseur de l'étape a) ou b) a en outre subi une étape de sulfuration.

Selon une variante, la teneur en azote basique dans la charge est supérieure ou égale à 50 ppm.

Selon une variante, la charge est une charge issue du craquage catalytique, du coker ou de la viscoréduction.

Selon une variante, chacune des étapes a) et b) est effectuée à une température comprise entre 180 et 450°C, à une pression comprise entre 0,5 et 10 MPa, à une vitesse volumique horaire comprise entre 0,1 et 20 h⁻¹ et avec un rapport hydrogène/charge exprimé en volume d'hydrogène, mesuré dans les conditions normales de température et pression, par volume de charge liquide compris entre 50 l/l à 2000 l/l.

Selon une variante, l'étape i) de l'étape b) comprend les étapes successives suivantes :
i') on imprègne un support d'alumine par au moins une solution contenant au moins un métal du groupe VIB, au moins un métal du groupe VIII et ledit phosphore pour obtenir un support imprégné,
   i") on sèche le support imprégné obtenu à l'étape i') à une température inférieure à 180°C sans calcination ultérieure pour obtenir unsupport imprégné séché,
   i''') on imprègne le support imprégné séché obtenu à l'étape i") par une solution d'imprégnation comprenant au moins un composé organique contenant de l'oxygène et/ou de l'azote pour obtenir un précurseur catalytique imprégné,
   i"") on laisse maturer le précurseur catalytique imprégné obtenu à l'étape i''') pour obtenir ledit précurseur de catalyseur.

Selon une variante, l'effluent obtenu à l'étape a) est soumis à une étape de séparation permettant de séparer une fraction lourde et une fraction légère contenant le H₂S et le NH₃ formés lors de l'étape a), ladite fraction lourde étant ensuite introduite dans l'étape b).

### Description détaillée

### La charge et les conditions opératoires

La charge hydrocarbonée traitée selon le procédé d'hydrotraitement de l'invention présente une température moyenne pondérée (TMP) comprise entre 280°C et 350°C. La TMP est définie à partir de la température à laquelle distillent 5%, 50% et 70% du volume de la charge selon la formule suivante : TMP = (T 5% + 2 x T 50% + 4 x T 70%)/ 7. La TMP est calculée à partir de valeurs de distillation simulée. La charge hydrocarbonée traitée a généralement un intervalle de distillation compris entre 150°C et 500°C, de préférence entre 80 et 450°C.

Dans la suite du texte, nous appellerons conventionnellement cette charge gazole, mais cette désignation n'a aucun caractère restrictif. Toute charge hydrocarbonée contenant du soufre et des composés azotés inhibiteurs de l'hydrotraitement, et une TMP similaire à celle d'une coupe gazole peut être concernée par le procédé objet de la présente invention. La charge hydrocarbonée peut être de nature chimique quelconque, c'est à dire posséder une répartition quelconque entre les différentes familles chimiques notamment les paraffines, oléfines, naphtènes et aromatiques.

Ladite charge hydrocarbonée comprend des molécules organiques azotées et/ou soufrées. Les molécules organiques azotées sont soit basiques, comme les amines, les anilines, les pyridines, les acridines, les quinoléines et leurs dérivés, soit neutres comme par exemple les pyrroles, les indoles, les carbazoles et leurs dérivés. Ce sont notamment les molécules azotés basiques qui inhibent les catalyseurs d'hydrotraitement, et notamment les catalyseurs additivés.

La teneur en azote totale (neutre et basique) dans la charge est supérieure ou égale à 150 ppm, de préférence elle est comprise entre 200 et 6000 ppm poids, de manière plus préférée entre 300 et 4000 ppm poids et de manière encore plus préférée entre 400 et 4000 ppm. La teneur en azote basique présente au moins un tiers de la teneur en azote globale.

La teneur en azote basique est généralement supérieure ou égale à 50 ppm, de manière plus préférée entre 65 et 2000 ppm poids et de manière encore plus préférée entre 100 et 2000 ppm.

La teneur en soufre dans la charge est généralement comprise entre 0,01 et 5% poids, de manière préférée comprise entre 0,2 et 4% poids et de manière encore plus préférée entre 0,25 et 3 % poids.

La charge traitée contient généralement très peu de résines, la teneur en résines est généralement inférieure à 1% pds.

Ladite charge hydrocarbonée est avantageusement choisie parmi les LCO (Light Cycle Oil selon la terminologie anglo-saxonne ou gazoles légers issus d'une unité de craquage catalytique), les distillats atmosphériques par exemple gasoils issus de la distillation directe du brut ou d'unités de conversion telles que le craquage catalytique en lit fluidisé, le coker ou la viscoréduction, ou les distillats provenant de procédés de désulfuration ou d'hydroconversion en lit fixe ou en lit bouillonnant de résidus atmosphériques, ou un mélange desdites charges précédemment citées.

Le procédé d'hydrotraitement selon l'invention est particulièrement adapté pour l'hydrotraitement de charges plus difficiles à hydrotraiter (ayant une haute teneur en soufre et en azote) que les coupes directement issues de la distillation atmosphérique du brut. Le procédé d'hydrotraitement selon l'invention est particulièrement adapté pour l'hydrotraitement de charges ayant une teneur élevée en azote, et notamment une teneur élevée en azote basique.

De préférence, ladite charge hydrocarbonée est choisie parmi une charge LCO (Light Cycle Oil selon la terminologie anglo-saxonne) issue d'un craquage catalytique en lit fluidisé (ou FCC pour Fluid Catalytic Cracking selon la terminologie anglo-saxonne), ou une coupe issue du procédé de coker ou de la viscoréduction. Ce type de coupe présente généralement les caractéristiques suivantes : une teneur en soufre supérieure à 0,5% poids, généralement entre 0.5 et 3 % poids, une teneur en azote supérieure à 150 ppm, généralement entre 200 ppm et 6000 ppm poids, et de préférence entre 300 ppm et 4000 ppm, et parmi cet azote, au moins 50 ppm de composés dit basiques, généralement entre 150 et 2000 ppm, et une teneur en aromatique supérieure à 25% poids, généralement entre 30 et 90 % poids.

Le procédé selon l'invention peut être effectué en un, deux ou plusieurs réacteurs. Il est généralement effectué en lit fixe.

Lorsque le procédé selon l'invention est effectué en deux réacteurs, l'étape a) peut être effectuée dans le premier réacteur traversé par la charge, puis l'étape b) peut être effectuée dans le deuxième réacteur placé en aval du premier réacteur. Optionnellement, l'effluent de l'étape a) sortant du premier réacteur peut être soumis à une étape de séparation permettant de séparer une fraction légère contenant notamment le H₂S et le NH₃ formés lors de l'hydrotraitement dans l'étape a) d'une fraction lourde contenant les hydrocarbures partiellement hydrotraités. La fraction lourde obtenue après l'étape de séparation est ensuite introduite dans le deuxième réacteur permettant d'effectuer l'étape b) du procédé selon l'invention. L'étape de séparation peut être effectuée par distillation, séparation flash ou toute autre méthode connue par l'homme du métier.

Lorsque le procédé est effectué dans un seul réacteur, l'étape a) est effectuée dans une première zone contenant le premier catalyseur qui occupe un volume V1, et l'étape b) est effectuée dans une deuxième zone contenant le deuxième catalyseur qui occupe un volume V2. Le pourcentage volumique de la première zone contenant le catalyseur sous forme oxyde de l'étape a) par rapport au volume total des zones est au moins de 10 % vol. Le pourcentage volumique de la première zone contenant le catalyseur sous forme oxyde de l'étape a) est ajusté de manière à maximiser la conversion des composés azotés inhibiteurs, dit basique. La répartition des volumes V1/V2 est comprise entre 10 % vol / 90% vol et 50% vol / 50% vol respectivement de la première et deuxième zone.

Les métaux du groupe VIB ou du groupe VIII utilisés pour former la phase active des catalyseurs de l'étape a) ou b) peuvent être identiques ou différents dans chacune des étapes a) ou b).

Les conditions opératoires utilisées dans les étapes a) ou b) du procédé d'hydrotraitement selon l'invention sont généralement les suivantes : le température est avantageusement comprise entre 180 et 450°C, et de préférence entre 250 et 400°C, la pression est avantageusement comprise entre 0,5 et 10 MPa, et de préférence entre 1 et 8 MPa, la vitesse volumique horaire (définie comme le rapport du débit volumique de charge sur le volume du catalyseur par heure) est avantageusement comprise entre 0,1 et 20 h⁻¹ et de préférence entre 0,2 et 5 h⁻¹, et le rapport hydrogène/charge exprimé en volume d'hydrogène, mesuré dans les conditions normales de température et pression, par volume de charge liquide est avantageusement compris entre 50 l/l à 2000 l/l. Les conditions opératoires peuvent être identiques ou différentes dans les étapes a) et b). De préférence, elles sont identiques.

### Etape a) : Hydrotraitement avec un catalyseur sous forme oxydes

Selon l'étape a) du procédé selon l'invention, on met en contact en présence d'hydrogène ladite charge hydrocarbonée avec au moins un premier catalyseur comprenant un support d'alumine, du phosphore, et une phase active formée d'au moins un métal du groupe VIB sous forme oxyde et d'au moins un métal du groupe VIII sous forme oxyde, ledit premier catalyseur étant préparé selon un procédé comprenant au moins une étape de calcination.

Le catalyseur utilisé dans l'étape a) selon l'invention est composé d'un support d'alumine, de phosphore, et d'une phase active formée d'au moins un métal du groupe VIB sous forme oxyde et d'au moins un métal du groupe VIII sous forme oxyde.

De manière générale, la teneur totale en métal du groupe VIB et en métal du groupe VIII, est supérieure à 6 % poids, et de préférence entre 10 et 50 % poids oxydes de métaux des groupes VIB et VIII par rapport au poids total du catalyseur.

La teneur en métal du groupe VIB est comprise entre 5 et 40% poids, de préférence entre 8 et 35 % poids, et de manière plus préférée entre 10 et 30 % poids d'oxyde de métal(ux) du groupe VIB par rapport au poids total du catalyseur.

La teneur en métal du groupe VIII est comprise entre 1 et 10% poids, de préférence entre 1,5 et 9% poids, et de manière plus préférée entre 2 et 8% poids d'oxyde de métal du groupe VIII par rapport au poids total du catalyseur.

Le métal du groupe VIB présent dans la phase active du catalyseur mis en oeuvre dans le procédé d'hydrotraitement selon l'invention est préférentiellement le molybdène.

Le métal du groupe VIII présent dans la phase active du catalyseur mis en oeuvre dans le procédé d'hydrotraitement selon l'invention est préférentiellement choisi parmi le cobalt, le nickel et le mélange de ces deux éléments.

De préférence, la phase active du catalyseur utilisé dans l'étape a) est choisie dans le groupe formé par la combinaison des éléments nickel-molybdène, cobalt-molybdène, et nickel-cobalt-molybdène.

Le rapport molaire métal du groupe VIII sur métal du groupe VIB dans le catalyseur sous forme oxyde est préférentiellement compris entre 0,1 et 0,8, de préférence compris entre 0,15 et 0,6, et de manière encore plus préférée compris entre 0,2 et 0,5.

Ledit catalyseur de l'étape a) comprend également du phosphore en tant que dopant. Le dopant est un élément ajouté qui en lui-même ne présente aucun caractère catalytique mais qui accroit l'activité catalytique de la phase active.

La teneur en phosphore dans ledit catalyseur de l'étape a) est de préférence comprise entre 0,1 et 10 % poids de P₂O₅, de préférence entre 0,2 et 8 % poids de P₂O₅, de manière très préférée entre 0,3 et 8 % poids de P₂O₅.

Le rapport molaire phosphore sur métal du groupe VIB dans le catalyseur de ladite étape a) est supérieur ou égal à 0,05, de préférence supérieur ou égal à 0,07, de manière plus préférée compris entre 0,08 et 0,5.

Le catalyseur utilisé dans l'étape a) selon l'invention peut avantageusement contenir en outre au moins un dopant choisi parmi le bore et le fluor et un mélange de bore et de fluor.

Lorsque le catalyseur d'hydrotraitement utilisé dans l'étape a) contient du bore, la teneur en est de préférence comprise entre 0,1 et 10 % poids d'oxyde de bore, de préférence entre 0,2 et 7 % poids d'oxyde de bore, de manière très préférée entre 0,2 et 5 % poids d'oxyde de bore.

Lorsque le catalyseur d'hydrotraitement utilisé dans l'étape a) contient du fluor, la teneur en fluor est de préférence comprise entre 0,1 et 10 % poids de fluor, de préférence entre 0,2 et 7 % poids de fluor, de manière très préférée entre 0,2 et 5 % poids de fluor.

Le support est un support d'alumine, c'est-à-dire qu'il contient de l'alumine et éventuellement des métaux et/ou le(s) dopants qui ont été introduits en-dehors des imprégnations (introduits par exemple lors de la préparation (malaxage, peptisation...) du support ou de sa mise en forme). Le support est obtenu après mise en forme (extrusion par exemple) et calcination, en général entre 300 et 600°C.

De préférence, le support est constitué d'alumine, et de préférence d'alumine extrudée. De préférence, l'alumine est l'alumine gamma et de préférence ledit support d'alumine est constitué d'alumine gamma.

Le volume poreux du support d'alumine est généralement compris entre 0,1 cm³/g et 1,5 cm³/g, de préférence compris entre 0,4 cm³/g et 1,1 cm³/g. Le volume poreux total est mesuré par porosimétrie au mercure selon la norme ASTM D4284-92 avec un angle de mouillage de 140°, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III^{™} de la marque Microméritics^{™}.

La surface spécifique du support d'alumine est généralement comprise entre 5 m²/g et 400 m²/g, de préférence entre 10 m²/g et 350 m²/g, de façon plus préférée entre 40 m²/g et 350m²/g. La surface spécifique est déterminée dans la présente invention par la méthode B.E.T, méthode décrite dans le même ouvrage cité ci-dessus.

Ledit support d'alumine se présente avantageusement sous forme de poudre, ou est mis en forme de billes, d'extrudés, de pastilles, ou d'agglomérats irréguliers et non sphériques dont la forme spécifique peut résulter d'une étape de concassage. De manière très avantageuse, ledit support se présente sous forme d'extrudés.

La préparation d'un catalyseur sous forme oxyde utilisé dans l'étape a) peut être réalisée par toute méthode bien connue de l'Homme du métier.

Les métaux du groupe VIB et du groupe VIII dudit catalyseur peuvent avantageusement être introduits dans le catalyseur à divers niveaux de la préparation et de diverses manières. Lesdits métaux du groupe VIB et du groupe VIII peuvent avantageusement être introduits en partie lors de la mise en forme dudit support d'alumine ou de préférence après cette mise en forme.

Dans le cas où les métaux du groupe VIB et du groupe VIII sont introduits en partie lors de la mise en forme dudit support d'alumine, ils peuvent être introduits en partie seulement au moment du malaxage avec un gel d'alumine choisi comme matrice, le reste des métaux étant alors introduits ultérieurement. De manière préférée, lorsque les métaux du groupe VIB et du groupe VIII sont introduits pour partie au moment du malaxage, la proportion du métal du groupe VIB introduite au cours de cette étape est inférieure ou égale à 20 % de la quantité totale du métal du groupe VIB introduite sur le catalyseur final et la proportion du métal du groupe VIII introduite au cours de cette étape est inférieure ou égale à 50 % de la quantité totale du métal du groupe VIII introduite sur le catalyseur final.

Dans le cas où les métaux du groupe VIB et du groupe VIII sont introduits au moins en partie et de préférence en totalité, après la mise en forme dudit support d'alumine, l'introduction des métaux du groupe VIB et du groupe VIII sur le support d'alumine peut être avantageusement effectuée par une ou plusieurs imprégnations en excès de solution sur le support d'alumine, ou de préférence par une ou plusieurs imprégnations à sec et, de manière préférée, par une seule imprégnation à sec dudit support d'alumine, à l'aide de solutions aqueuse ou organique contenant des précurseurs des métaux. L'imprégnation à sec consiste à mettre en contact le support avec une solution contenant au moins un précurseur desdits métal (métaux) du groupe VIB et/ou du groupe VIII, dont le volume est égal au volume poreux du support à imprégner. Le solvant de la solution d'imprégnation peut etre de l'eau ou un composé organique tel qu'un alcool. De préférence, on utilise une solution aqueuse comme solution d'imprégnation.

De manière très préférée, les métaux du groupe VIB et du groupe VIII sont introduits en totalité après la mise en forme dudit support d'alumine, par une imprégnation à sec dudit support à l'aide d'une solution d'imprégnation aqueuse contenant les sels précurseurs des métaux. L'introduction des métaux du groupe VIB et du groupe VIII peut également être avantageusement effectuée par une ou plusieurs imprégnations du support d'alumine, par une solution contenant les sels précurseurs des métaux. Dans le cas où les métaux sont introduits en plusieurs imprégnations des sels précurseurs correspondants, une étape de séchage intermédiaire du catalyseur est en général effectuée, à une température comprise entre 50 et 180°C, de manière préférée entre 60 et 150°C, et de manière très préférée entre 75 et 130°C.

De manière préférée, le métal du groupe VIB est introduit en même temps que le métal du groupe VIII, quel que soit le mode d'introduction.

Les précurseurs de molybdène qui peuvent être utilisés sont bien connus de l'homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique (H₃PMo₁₂O₄₀), et leurs sels, et éventuellement l'acide silicomolybdique (H₄SiMo₁₂O₄₀) et ses sels. Les sources de molybdène peuvent être également tout hétéropolycomposé de type Keggin, Keggin lacunaire, Keggin substitué, Dawson, Anderson, Strandberg, par exemple. On utilise de préférence le trioxyde de molybdène et les hétéropolycomposés de type Keggin, Keggin lacunaire, Keggin substitué et Strandberg.

Les précurseurs de cobalt qui peuvent être utilisées sont avantageusement choisis parmi les oxydes, les hydroxydes, les hydroxycarbonates, les carbonates et les nitrates, par exemple. L'hydroxyde de cobalt et le carbonate de cobalt sont utilisés de manière préférée.

Les précurseurs de nickel qui peuvent être utilisées sont avantageusement choisis parmi les oxydes, les hydroxydes, les hydroxycarbonates, les carbonates et les nitrates, par exemple. L'hydroxyde de nickel et l'hydroxycarbonate de nickel sont utilisés de manière préférée.

De la même manière, le phosphore peut avantageusement être introduit dans le catalyseur à divers niveaux de la préparation et de diverses manières. Ledit phosphore peut avantageusement être introduit lors de la mise en forme dudit support d'alumine, ou de préférence après cette mise en forme. Il peut par exemple être introduit juste avant ou juste après la peptisation de la matrice choisie, telle que par exemple et de préférence l'oxyhydroxyde d'aluminium (boehmite) précurseur de l'alumine. Il peut également être avantageusement introduit seul ou en mélange avec l'un au moins des métaux du groupe VIB et VIII.

Ledit phosphore est de préférence introduit en mélange avec les précurseurs des métaux du groupe VIB et du groupe VIII, en totalité ou en partie sur le support d'alumine mis en forme, de préférence l'alumine sous forme extrudée, par une imprégnation à sec dudit support d'alumine à l'aide d'une solution contenant les précurseurs des métaux et le précurseur du phosphore.

La source de phosphore préférée est l'acide orthophosphorique H₃PO₄, mais ses sels et esters comme phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Le catalyseur utilisé dans l'étape a) selon l'invention peut avantageusement contenir en outre au moins un dopant choisi parmi le bore et le fluor et un mélange de bore et de fluor. L'introduction de ce dopant peut se faire de la même manière que l'introduction du phosphore à divers niveaux de la préparation et de diverses manières. Il peut être introduit au moins en partie lors de la préparation du support (mise en forme comprise). Il peut être avantageusement introduit seul ou en mélange avec le phosphore ou l'un au moins des précurseurs des métaux du groupe VIB et VIII. Il est de préférence introduit en mélange avec les précurseurs des métaux du groupe VIB et du groupe VIII et le phosphore, en totalité ou en partie sur le support d'alumine mis en forme, de préférence l'alumine sous forme extrudée, par une imprégnation à sec dudit support d'alumine à l'aide d'une solution contenant les précurseurs des métaux, le précurseur du phosphore et le(s) précurseur(s) du dopant choisi parmi le bore et/ou le fluor.

La source de bore peut être l'acide borique, de préférence l'acide orthoborique H₃BO₃, le biborate ou le pentaborate d'ammonium, l'oxyde de bore, les esters boriques. Le bore peut être introduit par exemple par une solution d'acide borique dans un mélange eau/alcool ou encore dans un mélange eau/ethanolamine.

Les sources de fluor qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Le fluor peut être introduit par exemple par imprégnation d'une solution aqueuse d'acide fluorhydrique, ou de fluorure d'ammonium ou encore de bifluorure d'ammonium.

Dans un mode préféré, le procédé de préparation du catalyseur de l'étape a) du procédé selon l'invention comprend les étapes suivantes :
a') on imprègne une solution contenant au moins un précurseur du métal du groupe VIB, au moins un précurseur du métal du groupe VIII, du phosphore, éventuellement un autre dopant choisi parmi le bore et/ou le fluore, sur un support d'alumine,
a") on sèche éventuellement le support imprégné issu de l'étape a'),
a''') on calcine le support imprégné éventuellement séché, de manière à transformer les précurseurs des métaux du groupe VIB et du groupe VIII en oxydes.

L'étape a') d'imprégnation est effectuée selon les variantes décrites ci-dessus. De manière très préférée, les métaux du groupe VIB et du groupe VIII, le phosphore et éventuellement un autre dopant choisi parmi le bore et/ou le fluore sont introduits en totalité après la mise en forme dudit support d'alumine, par une imprégnation à sec dudit support à l'aide d'une solution d'imprégnation aqueuse contenant les sels précurseurs des métaux, du phosphore et éventuellement du dopant choisi parmi le bore et/ou le fluore.

Le séchage de l'étape a") est généralement effectué à une température comprise entre 50 et 180°C, de préférence entre 60 et 150°C, et de manière très préférée entre 75 et 130°C. Le séchage est généralement réalisé pendant une durée comprise entre 1 et 24 heures, de préférence entre 1 et 20 heures. Le séchage est effectué sous air, ou sous atmosphère inerte (azote par exemple).

La calcination de l'étape a''') est généralement effectuée à une température comprise entre 250 ° C et 900 ° C, de préférence comprise entre 350 ° C et 750°C. La durée de calcination est généralement comprise entre 0,5 heures et 16 heures, de préférence entre 1 heures et 5 heures. Elle s'effectue généralement sous air. La calcination permet de transformer les précurseurs des métaux du groupe VIB et VIII en oxydes.

Avant son utilisation, il est avantageux de transformer le catalyseur sous forme oxyde (calciné) utilisé dans l'étape a) du procédé selon l'invention en un catalyseur sulfuré afin de former son espèce active. Cette phase d'activation ou de sulfuration s'effectue par les méthodes bien connues de l'homme de l'art, et avantageusement sous une atmosphère sulfo-réductrice en présence d'hydrogène et d'hydrogène sulfuré.

Selon une variante préférée, le catalyseur obtenu à l'étape a''') est soumis à une étape de sulfuration. L'étape de sulfuration est avantageusement effectuée de manière *ex situ* ou *in situ.* Les agents sulfurants sont le gaz H₂S ou tout autre composé contenant du soufre utilisé pour l'activation des charges hydrocarbures en vue de sulfurer le catalyseur. Lesdits composés contenant du soufre sont avantageusement choisis parmi les alkyldisulfures tels que par exemple le disulfure de diméthyle (DMDS), les alkylsulfures, tel que par exemple le sulfure de diméthyle, le n-butylmercaptan, les composés polysulfures de type tertiononylpolysulfure ou tout autre composé connu de l'homme du métier permettant d'obtenir une bonne sulfuration du catalyseur. De manière préférée, le catalyseur est sulfuré *in situ* en présence d'un agent sulfurant et d'une charge hydrocarbonée. De manière très préférée, le catalyseur est sulfuré *in situ* en présence d'une charge hydrocarbonée additivée de disulfure de diméthyle.

### Etape b) : Hydrotraitement avec un catalyseur additivé

Selon l'étape b) du procédé selon l'invention, on met en contact en présence d'hydrogène l'effluent obtenu à l'étape a) avec au moins un deuxième catalyseur comprenant un support d'alumine, du phosphore, une phase active formée d'au moins un métal du groupe VIB et d'au moins un métal du groupe VIII et au moins un composé organique contenant de l'oxygène et/ou de l'azote, ledit deuxième catalyseur étant préparé selon un procédé comprenant les étapes suivantes :
i) on met en contact au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur,
ii) on sèche ledit précurseur de catalyseur issu de l'étape i) à une température inférieure à 200°C, sans le calciner ultérieurement

Le catalyseur utilisé dans l'étape b) selon l'invention est composé d'un support d'alumine, de phosphore, d'une phase active formée d'au moins un métal du groupe VIB et d'au moins un métal du groupe VIII, et d'un composé organique contenant de l'oxygène ou de l'azote. Le catalyseur utilisé dans l'étape b) est un catalyseur dit additivé. Lors de sa préparation il ne subit pas de calcination, c'est-a-dire que sa phase active comprend les métaux du groupe VIB et VIII qui n'ont pas été transformés sous forme oxyde.

La teneur totale en métal du groupe VIII et en métal du groupe VIB ainsi que le rapport molaire métal du groupe VIII sur métal du groupe VIB du catalyseur selon l'étape b) sont dans les mêmes gammes que celles décrites pour le catalyseur de l'étape a).

Le métal du groupe VIB présent dans la phase active du catalyseur mis en oeuvre dans l'étape b) selon l'invention est préférentiellement le molybdène.

Le métal du groupe VIII présent dans la phase active du catalyseur mis en oeuvre dans l'étape b) selon l'invention est préférentiellement choisi parmi le cobalt, le nickel et le mélange de ces deux éléments.

De préférence, la phase active du catalyseur utilisé dans l'étape b) est choisie dans le groupe formé par la combinaison des éléments nickel-molybdène, cobalt-molybdène, et nickel-cobalt-molybdène.

Le catalyseur additivé utilisé dans l'étape b) comprend également du phosphore en tant que dopant. La teneur en phosphore du catalyseur selon l'étape b) ainsi que le rapport molaire phosphore sur métal du groupe VIB du catalyseur selon l'étape b) sont dans les mêmes gammes que celles décrites pour le catalyseur de l'étape a).

Le catalyseur utilisé dans l'étape b) selon l'invention peut avantageusement contenir au moins un autre dopant choisi parmi le bore et/ou le fluor. Lorsque le catalyseur utilisé dans l'étape b) contient du bore et/ou du fluor, la teneur en bore et/ou en fluor sont dans les mêmes gammes que celles décrites pour le catalyseur de l'étape a).

Le support d'alumine dudit catalyseur utilisé dans l'étape b) a été décrit dans la partie étape a). Le support du catalyseur additivé selon l'étape b) peut être identique ou différent du support du catalyseur utilisé dans l'étape a).

De préférence, le support dudit catalyseur utilisé dans l'étape b) est constitué d'alumine, et de préférence d'alumine extrudée. De préférence, l'alumine est l'alumine gamma, et de préférence ledit support d'alumine est constitué d'alumine gamma.

Le catalyseur utilisé dans l'étape b) contient en outre un composé organique contenant de l'oxygène et/ou de l'azote. Ce composé est un composé organique contenant plus de 2 atomes de carbone et au moins un atome d'oxygène et/ou d'azote.

Le composé organique contenant de l'oxygène peut être l'un ou plusieurs choisis parmi un acide carboxylique, un alcool, un aldéhyde ou un ester. A titre d'exemple, le composé organique contenant de l'oxygène peut être l'un ou plusieurs choisis dans le groupe constitué par l'éthylène glycol, le glycérol, le polyéthylène glycol (avec un poids moléculaire de 200 à 1500), l'acétophénone, le 2,4-pentanedione, le pentanole, l'acide acétique, l'acide maléique, l'acide oxalique, l'acide tartrique, l'acide formique, l'acide citrique et le succinate de dialkyle C1-C4. Le succinate de dialkyle utilisé est de préférence compris dans le groupe composé du succinate de diméthyle, du succinate de diéthyle, du succinate de dipropyle et du succinate de dibutyle. De manière préférée, le succinate de dialkyle C1-C4 utilisé est le succinate de diméthyle ou le succinate de diéthyle. De manière très préférée, le succinate de dialkyle C1-C4 utilisé est le succinate de diméthyle. Au moins un succinate de dialkyle C1-C4 est utilisé, de préférence un seul, et de préférence le succinate de diméthyle.

Le composé organique contenant de l'azote peut être choisi parmi une amine. A titre d'exemple, le composé organique contenant de l'azote peut être de l'éthylène diamine ou la tétraméthylurée.

Le composé organique contenant de l'oxygène et d'azote peut être choisi parmi un acide carboxylique aminé, un alcool aminé, un nitrile ou un amide. A titre d'exemple, le composé organique contenant de l'oxygène et de l'azote peut être l'acide aminotriacétique l'acide 1,2-cyclohexanediaminetétraacétique, la mono-éthanolamine, l'acétonitrile, la N-méthylpyrrolidone, le diméthylformamide ou encore l'EDTA.

De préférence, le composé organique contient de l'oxygène. De manière particulièrement préférée, le composé organique comprend au moins la combinaison du succinate de dialkyle C1-C4, et en particulier du diméthyle, et de l'acide acétique. Selon une autre variante particulièrement préférée, le composé organique comprend au moins l'acide citrique.

Le catalyseur utilisé dans l'étape b) est préparé selon un procédé comprenant les étapes suivantes :
i) on met en contact au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur,
ii) on sèche ledit précurseur de catalyseur issu de l'étape i) à une température inférieure à 200°C, sans le calciner ultérieurement

L'étape i) de mise en contact comporte plusieurs modes de mise en oeuvre.

Selon le premier mode de mise en oeuvre de l'étape i) du procédé de préparation du catalyseur utilisé dans l'étape b), on procède au dépôt desdits composant des métaux du groupe VIB et du groupe VIII, du phosphore et à celui dudit composé organique, sur ledit support, par au moins une étape de co-imprégnation, préférentiellement par imprégnation à sec. Selon ce mode de mise en oeuvre, aussi appelé "co-imprégnation", lesdits composants des métaux du groupe VIB et du groupe VIII, le phosphore, et le composé organique sont introduits simultanément dans ledit support. Ledit premier mode de mise en oeuvre de l'étape i) comprend la mise en oeuvre d'une ou plusieurs étapes de co-imprégnation, chaque étape de co-imprégnation étant de préférence suivi d'une étape de séchage tel que décrite selon l'étape i") ci-dessous.

Selon le deuxième mode de mise en oeuvre de l'étape i) du procédé de préparation du catalyseur utilisé dans l'étape b), on met en contact au moins un précurseur catalytique comprenant au moins un métal du groupe VIII, au moins un métal du groupe VIB, ledit phosphore et au moins ledit support d'alumine avec au moins un composé organique contenant de l'oxygène et/ou de l'azote. Selon l'invention, ledit deuxième mode de mise en oeuvre est une préparation dite "post-imprégnation". Selon cette variante de réalisation, le précurseur de catalyseur est préparé en procédant au dépôt d'au moins un composant d'un métal du groupe VIB, d'au moins un composant d'un métal du groupe VIII et du phosphore sur ledit support par toute méthode connue de l'Homme du métier, préférentiellement par imprégnation à sec, imprégnation en excès ou encore par dépôt-précipitation selon des méthodes bien connues de l'Homme du métier. Le dépôt des composants des métaux des groupes VIB et VIII et du phosphore peut être effectué par une ou plusieurs imprégnations, suivi d'une étape de séchage telle que décrite selon l'étape i") ci-dessous.

Selon une variante particulièrement préférée, la mise en contact selon l'étape i) est effectuée par le deuxième mode de mise en oeuvre de l'étape i), c'est-à-dire par post-imprégnation. Selon une variante particulièrement préférée, le catalyseur utilisé dans l'étape b) est préparé selon le procédé de préparation décrit dans US 2013/008829. Plus précisément, l'étape i) du procédé de préparation du catalyseur de l'étape b) peut comprendre les étapes successives suivantes qui vont être détaillées par la suite :
i') on imprègne un support d'alumine par au moins une solution contenant au moins un métal du groupe VIB, au moins un métal du groupe VIII et ledit phosphore pour obtenir un support imprégné,
i") on sèche le support imprégné obtenu à l'étape i') à une température inférieure à 180°C sans calcination ultérieure pour obtenir unsupport imprégné séché,
i''') on imprègne le support imprégné séché obtenu à l'étape i") par une solution d'imprégnation comprenant au moins un composé organique contenant de l'oxygène et/ou de l'azote pour obtenir un précurseur catalytique imprégné,
i"") on laisse maturer le précurseur catalytique imprégné obtenu à l'étape i''') pour obtenir ledit précurseur de catalyseur.

Dans l'étape i'), l'introduction des métaux du groupe VIB et du groupe VIII sur le support d'alumine peut être avantageusement effectuée par une ou plusieurs imprégnations en excès de solution sur le support d'alumine, ou de préférence par une ou plusieurs imprégnations à sec et de manière préférée par une imprégnation à sec dudit support d'alumine, à l'aide d'une solution aqueuse ou organique contenant des précurseurs des métaux. L'étape d'imprégnation peut être effectuée de la même manière que celle décrite pour la préparation du catalyseur sous forme oxyde décrite à l'étape a). Les précurseurs du métal du groupe VIB et du groupe VIII sont ceux décrits pour l'étape a). Ledit phosphore et l'éventuel autre dopant choisi parmi le bore et/ou le fluore peuvent être introduits de la même manière que celle décrite à l'étape a). Les précurseurs du phosphore, du bore et du fluore sont ceux décrits à l'étape a).

L'introduction des métaux du groupe VIB et du groupe VIII et du phosphore sur le support d'alumine est ensuite suivie d'une étape i") de séchage au cours de laquelle le solvant (qui est généralement de l'eau) est éliminé, à une température comprise entre 50 et 180°C, de manière préférée entre 60 et 150°C ou encore entre 65 et 145°C et de manière très préférée entre 70 et 140°C ou encore entre 75 et 130°C. L'étape de séchage du support imprégné séché ainsi obtenu n'est jamais suivie d'une étape de calcination sous air à une température supérieure à 200°C.

De préférence, dans l'étape i'), ledit support imprégné est obtenu par imprégnation à sec d'une solution comprenant des précurseurs des métaux du groupe VIB et du groupe VIII, et du phosphore sur un support d'alumine calciné mis en forme, suivie d'un séchage à une température inférieure à 180°C, de préférence comprise entre 50 et 180 °C, de manière préférée entre 60 et 150°C et de manière très préférée entre 75 et 130°C. Il est ainsi obtenu est un support imprégné séché à l'issue de l'étape i").

Conformément à l'étape i'''), ledit support imprégné séché est imprégné par une solution d'imprégnation comprenant au moins un composé organique contenant de l'oxygène et/ou de l'azote, et de préférence le succinate de dialkyle C1-C4 (et en particulier du succinate de diméthyle) et de l'acide acétique. Selon une autre variante, la solution d'imprégnation de l'étape i''') comprend de préférence de l'acide citrique. La solution d'imprégnation comprenant au moins ledit composé organique est de préférence une solution aqueuse.

Le rapport molaire de composé(s) organique(s) contenant de l'oxygène et/ou de l'azote par élément(s) du groupe VIB imprégné du précurseur catalytique, engagé sur le catalyseur est compris entre 0,05 à 2 mol/mol, de préférence compris entre 0,1 à 1,8 mol/mol, de manière préférée compris entre 0,15 et 1,5 mol/mol avant séchage de l'étape ii). Lorsque le composant organique est un mélange de succinate de dialkyle C1-C4 (et en particulier du succinate de diméthyle) et de l'acide acétique, lesdits composants sont avantageusement introduits dans la solution d'imprégnation de l'étape i''') du procédé selon l'invention dans une quantité correspondant :
- à un rapport molaire de succinate de dialkyle (par ex diméthyle) par élément(s) du groupe VIB imprégné du précurseur catalytique compris entre 0,05 à 2 mol/mol, de préférence compris entre 0,1 à 1,8 mol/mol, de manière préférée compris entre 0,15 et 1,5 mol/mol,
- à un rapport molaire d'acide acétique par élément(s) du groupe VIB imprégné du précurseur catalytique compris entre 0,1 à 5 mol/mol, de préférence compris entre 0,5 à 4 mol/mol, de manière préférée compris entre 1,3 et 3 mol/mol et de manière très préférée, compris entre 1,5 et 2,5 mol/mol.

Le(s)dit(s) composé(s) organique(s) peut(vent) avantageusement être déposé(s) en une ou plusieurs étapes soit par imprégnation en slurry, soit par imprégnation en excès, soit par imprégnation à sec, soit par tout autre moyen connu de l'homme du métier.

Conformément à l'étape i'''), le composé organique contenant de l'oxygène ou de l'azote est introduit sur le support imprégné séché par au moins une étape d'imprégnation, et de préférence par une seule étape d'imprégnation, et de manière particulièrement préférée par une seul étape d'imprégnation à sec.

Conformément à l'étape i"") du procédé de préparation selon l'invention, le précurseur catalytique imprégné issu de l'étape i''') est soumis à d'une étape de maturation. Elle est avantageusement réalisée à pression atmosphérique et à une température comprise entre 17°C et 50°C et généralement une durée de maturation comprise entre dix minutes et quarante huit heures, et de préférence comprise entre trente minutes et cinq heures, est suffisante. Des durées plus longues ne sont pas exclues. Il est ainsi obtenu est un précurseur de catalyseur à l'issue de l'étape i"").

Conformément à l'étape ii) du procédé de préparation selon l'invention, le précurseur de catalyseur issu de l'étape i) est soumis à une étape de séchage à une température inférieure à 200°C, sans le calciner utérieurement.

L'étape ii) de séchage du procédé selon l'invention est avantageusement effectuée par toute technique connue de l'homme du métier. Elle est avantageusement effectuée à pression atmosphérique ou à pression réduite. De manière préférée, cette étape est réalisée à pression atmosphérique.

Cette étape ii) est avantageusement effectuée à une température comprise entre 50 et inférieure à 200°C, de préférence comprise entre 60 et 180 °C et de manière très préférée, comprise entre 80 et 160 °C.

L'étape ii) est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée, le séchage est réalisé en lit traversé en présence d'azote.

De préférence, cette étape a une durée comprise entre 30 minutes et 4 heures, et de préférence entre 1 heure et 3 heures.

A l'issue de l'étape ii) du procédé selon l'invention, on obtient un catalyseur séché, aussi appelé "catalyseur additivé", qui n'est soumis à aucune étape de calcination ultérieure sous air par exemple à une température supérieure à 200°C.

Avant son utilisation, il est avantageux de transformer le catalyseur additivé utilisé dans l'étape b) en un catalyseur sulfuré afin de former son espèce active. Cette phase d'activation ou de sulfuration s'effectue par les méthodes bien connues de l'homme de l'art, et avantageusement sous une atmosphère sulfo-réductrice en présence d'hydrogène et d'hydrogène sulfuré.

A l'issue de l'étape ii) du procédé selon l'invention, ledit catalyseur additivé séché obtenu est donc avantageusement soumis à une étape iii) de sulfuration, sans étape de calcination intermédiaire.

Ledit catalyseur séché est avantageusement sulfuré de manière *ex situ* ou *in situ.* On peut utiliser les mêmes agents sulfurants que ceux décrites pour le catalyseur sous forme oxyde dans l'étape a).

Lorsque la sulfuration est effectuée *in situ,* la sulfuration du catalyseur de l'étape b) est avantageusement effectuée en même temps que la sulfuration du catalyseur de l'étape a).

### Exemples

Les exemples qui suivent démontrent qu'un procédé d'hydrotraitement selon l'invention utilisant un enchaînement "catalyseur sous forme oxyde/catalyseur additivé" présente une activité améliorée et une stabilité améliorée par rapport à un procédé n'utilisant que des catalyseurs additivés.

### Préparation des catalyseurs A, B, C et D

On prépare les 4 catalyseurs suivants :
- Catalyseur A : Catalyseur calciné NiMoP/alumine
- Catalyseur B : Catalyseur calciné CoMoP/alumine
- Catalyseur C : Catalyseur NiMoP/alumine additivé avec de l'acide acétique et du succinate de diméthyle (post-imprégnation)
- Catalyseur D : Catalyseur CoMoP/alumine additivé avec de l'acide citrique (co-imprégnation)

### Préparation du support

Une matrice composée de boehmite tabulaire ultrafine ou gel d'alumine, commercialisée par la société Condéa Chemie GmbH a été utilisée. Ce gel a été mélangé à une solution aqueuse contenant de l'acide nitrique à 66 % (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,6 mm. Les extrudés sont ensuite séchés pendant une nuit à 120°C, puis calcinés à 600°C pendant 2 heures sous air humide contenant 50 g d'eau par kg d'air sec. On obtient ainsi des extrudés de support, ayant une surface spécifique de 300 m²/g. L'analyse par la diffraction des rayons X révèle que le support est uniquement composé d'alumine gamma cubique de faible cristallinité.

### Catalyseur A : catalyseur calciné NiMoP/alumine

Sur le support d'alumine décrit précédemment et qui se présente sous la forme extrudé, on ajoute dans le cas du catalyseur A à base de nickel, du nickel, du molybdène et du phosphore. La solution d'imprégnation est préparée par dissolution à chaud de l'oxyde de molybdène et d'hydroxycarbonate de nickel dans la solution d'acide phosphorique en solution aqueuse dans le but d'obtenir une formulation approximativement de 4/22/5 exprimée en % poids d'oxydes de nickel, de molybdène et en % poids d'anhydride phosphorique par rapport à la quantité de matière sèche du catalyseur final. Après imprégnation à sec, les extrudés sont laissés à maturer en atmosphère saturée en eau pendant 8 h, puis ils sont séchés une nuit à 90°C. La calcination à 450°C pendant 2 heures conduit au catalyseur A.

La composition finale du catalyseur A exprimée sous forme d'oxydes est alors la suivante : MoO₃ = 22,0 +- 0,2 (% en poids), NiO = 4,1 +- 0,1 (% en poids) et P₂O₅ = 5,0 +- 0, 1 (% en poids).

### Catalyseur B : CoMoP calciné

Sur le support d'alumine décrit précédemment et qui se présente sous la forme extrudé, on ajoute dans le cas du catalyseur B à base de cobalt, du cobalt, du molybdène et du phosphore. La solution d'imprégnation est préparée par dissolution à chaud de l'oxyde de molybdène et de carbonate de cobalt dans la solution d'acide phosphorique en solution aqueuse dans le but d'obtenir une formulation approximativement de 4/22/5 exprimée en % poids d'oxydes de cobalt, de molybdène et en % poids d'anhydride phosphorique par rapport à la quantité de matière sèche du catalyseur final. Après imprégnation à sec, les extrudés sont laissés à maturer en atmosphère saturée en eau pendant 8 h, puis ils sont séchés une nuit à 90°C. La calcination à 450°C pendant 2 heures conduit au catalyseur B.

La composition finale du catalyseur B exprimée sous forme d'oxydes est alors la suivante : MoO₃ = 22,0 +- 0,2 (% en poids), CoO = 4,1 +- 0,1 (% en poids) et P₂O₅ = 5,0 +- 0, 1 (% en poids).

### Catalyseur C : catalyseur NiMoP/alumine additivé avec de l'acide acétique et du succinate de diméthyle

Sur le support d'alumine décrit précédemment et qui se présente sous la forme extrudé, on ajoute dans le cas du catalyseur C à base de nickel, du nickel, du molybdène et du phosphore. La solution d'imprégnation est préparée par dissolution à chaud de l'oxyde de molybdène et d'hydroxycarbonate de nickel dans la solution d'acide phosphorique en solution aqueuse dans le but d'obtenir une formulation approximativement de 5/25/6 exprimée en % poids d'oxydes de nickel, de molybdène et en % poids d'anhydride phosphorique par rapport à la quantité de matière sèche du catalyseur final. Après imprégnation à sec, les extrudés sont laissés à maturer en atmosphère saturée en eau pendant 8 h, puis ils sont séchés une nuit à 90°C. Le support imprégné séché du catalyseur C est ensuite additivé par imprégnation à sec d'une solution contenant un mélange succinate de diméthyle (DMSU) et acide acétique (à 75 % de pureté). Les rapports molaires sont les suivants: DMSU/Mo = 0,85 mol/mol, DMSU/acide acétique = 0,5 mol/mol. Le catalyseur subit encore une étape de maturation de 3 h à 20°C sous air puis un séchage dans un four de type lit traversé à 120°C pendant 3 h.

La composition finale du catalyseur C exprimée sous forme d'oxydes est alors la suivante : MoO₃ = 25,1 +- 0,2 (% en poids), NiO = 5,1 +- 0,1 (% en poids) et P₂O₅ = 6,0 +- 0, 1 (% en poids).

### Catalyseur D : catalyseur CoMoP/alumine additivé avec de l'acide citrique

Sur le support d'alumine décrit précédemment et qui se présente sous la forme extrudé, on ajoute dans le cas du catalyseur D à base de cobalt, du molybdène et du phosphore. La solution d'imprégnation est préparée par dissolution à chaud de l'oxyde de molybdène et d'hydroxyde de cobalt et de l'acide citrique dans la solution d'acide phosphorique en solution aqueuse dans le but d'obtenir une formulation approximativement de 4/22/5 exprimée en % poids d'oxydes de cobalt, de molybdène et en % poids d'anhydride phosphorique par rapport à la quantité de matière sèche du catalyseur final. La quantité d'acide citrique exprimée en rapport molaire par rapport au molybdène est de acide citrique/Mo = 0,4 mol/mol. Après imprégnation à sec, les extrudés sont laissés à maturer en atmosphère saturée en eau pendant 8 h, puis ils sont séchés une nuit à 90°C puis subissent un séchage dans un four de type lit traversé à 140°C pendant 3h.

La composition finale du catalyseur D exprimée sous forme d'oxydes est alors la suivante : MoO₃ = 22,4 +- 0,2 (% en poids), CoO = 4,1 +- 0,1 (% en poids) et P₂O₅ = 5,0 +- 0, 1 (% en poids).

### Évaluation de différents enchaînements des catalyseurs A, B, C et D en hydrotraitement d'un mélange gazole de distillation/LCO

La charge utilisée est un mélange de 70% volume gazole issu de distillation atmosphérique (straight-run) et 30% volume gazole de coker et a une TMP de 285°C. Les caractéristiques de la charge sont les suivantes: densité (à 15 °C) 0,8486, soufre 1,06 % poids, azote 410 ppm, azote basique 200 ppm, aromatiques (UV) 29 % poids.
▪ Distillation Simulée :
   ▪ PI : 150°C
   ▪ 5 %: 200 ° C
   ▪ 10 %: 220 °C
   ▪ 50 %: 283 °C
   ▪ 70%: 307 ° C
   ▪ 90 %: 337 °C

Le test est mené dans un réacteur pilote isotherme à lit fixe traversé, les fluides circulant de bas en haut. Le réacteur comprend deux zones catalytiques permettant d'évaluer différents enchaînements des catalyseurs A, B, C et D. La charge traverse d'abord la première zone chargée avec le premier catalyseur, puis la deuxième zone chargée avec le deuxième catalyseur.

Selon l'exemple 1 (non conforme à l'invention), l'intégralité des deux zones catalytiques (100% du volume) contient du catalyseur additivé (catalyseur C).

Selon les exemples 2 et 3 (conformes à l'invention), la première zone est chargé avec un catalyseur calciné (catalyseurs A ou B: 30 % du volume), puis la deuxième avec un catalyseur additivé (catalyseur C : 70 % du volume).

Selon l'exemple 4 (non conforme à l'invention), les deux zones sont chargées avec un catalyseur additivé (catalyseur D : 30 % du volume, puis catalyseur C : 70 % volume).

Selon l'exemple 5 (non conforme à l'invention), la première zone est chargé avec un catalyseur additivé (catalyseur C : 70 % du volume), puis la deuxième avec un catalyseur calciné (catalyseur A : 30 % du volume).

Après sulfuration in situ à 350 °C dans l'unité sous pression au moyen du gazole du test auquel est additionné 2 % en poids de diméthyldisulfure, le test d'hydrodésulfuration a été conduit dans les conditions opératoires suivantes : une pression totale de 5 MPa (50 bar), un rapport H2/ charge de 380 l/l et une VVH de 1., 5h⁻¹.

La température est ajustée de manière à obtenir une teneur en soufre de 10 ppm à la sortie du réacteur. Le tableau suivant montre la température nécessaire afin d'obtenir une teneur en soufre de 10 ppm suivant les différents enchaînements des catalyseurs A, B, C et D. Une activité catalytique élevée s'exprime par une température T1 basse. Une stabilité élevée s'exprime par une température T2 basse après un temps de fonctionnement (ici 1000 heures).
Les résultats montrent clairement que l'enchaînement "catalyseur sous forme oxyde/catalyseur additivé" (exemples 2 et 3) permet d'obtenir une activité catalytique plus élevée et une stabilité plus élevée qu'un enchaînement "catalyseurs additivés" seuls (exemples 1 et 4) ou qu'un enchaînement "catalyseur additivé/catalyseur sous forme d'oxyde" (exemple 5).

**Tableau : Température permettant d'atteindre une teneur de 10 ppm en sortie du réacteur**

| *Exemple* | Chargement catalyseur(s) dans le réacteur (première zone/deuxième zone) | T1* | T2** |
|---|---|---|---|
| *1 comparatif* | 100% vol catalyseur C (NiMoP additivé) | 345°C | 348°C |
| *2 selon l'invention* | 30% vol catalyseur A (NiMoP calciné) + 70 % vol catalyseur C (NiMoP additivé) | 342°C | 343°C |
| *3 selon l'invention* | 30% vol catalyseur B (CoMoP calciné) + 70% vol catalyseur C (NiMoP additivé) | 343°C | 345°C |
| *4 comparatif* | 30 % vol catalyseur D (CoMoP additivé) + 70% vol catalyseur C (NiMoP additivé) | 348°C | 351°C |
| *5 comparatif* | 70%vol catalyseur C (NiMoP additivé) + 30% vol catalyseur B (NiMoP calciné) | 352°C | 357°C |
| *T1 : Température après 300h de fonctionnement | | | |
| **T2 : Température après 1000h de fonctionnement | | | |

Dans le cas des exemples 2, 3 et 4, les valeurs de l'hydrodéazotation (HDN) en % sur la première zone sont les suivantes et dans les conditions précitées:
▪ catalyseur A (NiMoP calciné) : HDN (%) = 70%
   La teneur en azote (totale) résiduel est de l'ordre de 150 ppm, majoritairement sous la forme d'espèces carbazoles non basiques.
▪ catalyseur B (CoMoP calciné) : HDN (%) = 67%
▪ catalyseur C (NiMoP additivé DMSU/acide acétique) : HDN (%) = 63 %
▪ catalyseur D (CoMoP additivé acide citrique) : HDN (%) = 58%.

On observe que les catalyseurs calcinés (catalyseurs A et B) permettent d'effectuer une HDN plus poussée qu'un catalyseur additivé (catalyseurs C et D).

## Revendications

1. Procédé d'hydrotraitement d'une charge hydrocarbonée contenant des composés azotés à une teneur supérieure à 150 ppm poids et ayant une température moyenne pondérée comprise entre 250 et 380°C, comportant les étapes suivantes :
a) on met en contact en présence d'hydrogène ladite charge hydrocarbonée avec au moins un premier catalyseur comprenant un support d'alumine, du phosphore, et une phase active formée d'au moins un métal du groupe VIB sous forme oxyde et d'au moins un métal du groupe VIII sous forme oxyde, ledit premier catalyseur étant préparé selon un procédé comprenant au moins une étape de calcination,
b) on met en contact en présence d'hydrogène l'effluent obtenu à l'étape a) avec au moins un deuxième catalyseur comprenant un support d'alumine, du phosphore, une phase active formée d'au moins un métal du groupe VIB et d'au moins un métal du groupe VIII, et au moins un composé organique contenant de l'oxygène et/ou de l'azote, ledit deuxième catalyseur étant préparé selon un procédé comprenant les étapes suivantes :
i) on met en contact au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur,
ii) on sèche ledit précurseur de catalyseur issu de l'étape i) à une température inférieure à 200°C, sans le calciner ultérieurement,
de manière à obtenir un effluent hydrotraité,
et dans lequel l'étape a) est effectuée dans une première zone contenant le premier catalyseur qui occupe un volume V1, et l'étape b) est effectuée dans une deuxième zone contenant le deuxième catalyseur qui occupe un volume V2, la répartition des volumes V1/V2 étant comprise entre 10 % vol / 90% vol et 50% vol / 50% vol respectivement de la première et deuxième zone.

2. Procédé selon la revendication 1, dans lequel pour le catalyseur de l'étape a) ou b), le métal du groupe VIB est le molybdène, et le métal du groupe VIII est choisi parmi le cobalt, le nickel et le mélange de ces deux éléments.

3. Procédé selon l'une des revendications 1 ou 2, dans lequel pour le catalyseur de l'étape a) ou b), la teneur en métal du groupe VIB est comprise entre 5 et 40% poids d'oxyde de métal du groupe VIB par rapport au poids total du catalyseur, la teneur en métal du groupe VIII est comprise entre 1 et 10% poids d'oxyde de métal du groupe VIII par rapport au poids total du catalyseur et la teneur en phosphore est comprise entre 0,1 et 10 % poids de P₂O₅ par rapport au poids total du catalyseur.

4. Procédé selon l'une des revendications 1 à 3, dans lequel le catalyseur de l'étape a) ou b) contient en outre au moins un dopant choisi parmi le bore et le fluor et un mélange de bore et de fluor.

5. Procédé selon l'une des revendications 1 à 4, dans lequel le composé organique est l'un ou plusieurs choisis parmi un acide carboxylique, un alcool, un aldéhyde, un ester, une amine, un acide carboxylique aminé, un alcool aminé, un nitrile ou un amide.

6. Procédé selon la revendication 5, dans lequel le composé organique est l'un ou plusieurs choisis parmi par l'éthylène glycol, le glycérol, le polyéthylène glycol (avec un poids moléculaire de 200 à 1500), l'acétophénone, le 2,4-pentanedione, le pentanole, l'acide acétique, l'acide maléique, l'acide oxalique, l'acide tartrique, l'acide formique, l'acide citrique et le succinate de dialkyle C1-C4.

7. Procédé selon la revendication 5, dans lequel le composé organique comprend au moins la combinaison du succinate de dialkyle C1-C4 et de l'acide acétique.

8. Procédé selon la revendication 5, dans lequel le composé organique comprend au moins l'acide citrique.

9. Procédé selon l'une des revendications 1 à 8, dans lequel le catalyseur de l'étape a) ou b) a en outre subi une étape de sulfuration.

10. Procédé selon l'une des revendications 1 à 9, dans lequel la teneur en azote basique dans la charge est supérieure ou égale à 50 ppm.

11. Procédé selon l'une des revendications 1 à 10, dans lequel la charge est une charge issue du craquage catalytique, du coker ou de la viscoréduction.

12. Procédé selon l'une des revendications 1 à 11, dans lequel chacune des étapes a) et b) est effectuée à une température comprise entre 180 et 450°C, à une pression comprise entre 0,5 et 10 MPa, à une vitesse volumique horaire comprise entre 0,1 et 20 h⁻¹ et avec un rapport hydrogène/charge exprimé en volume d'hydrogène, mesuré dans les conditions normales de température et pression, par volume de charge liquide compris entre 50 l/l à 2000 l/l.

13. Procédé selon l'une des revendications 1 à 12, dans lequel l'étape i) de l'étape b) comprend les étapes successives suivantes:
i') on imprègne un support d'alumine par au moins une solution contenant au moins un métal du groupe VIB, au moins un métal du groupe VIII et ledit phosphore pour obtenir un support imprégné,
i") on sèche le support imprégné obtenu à l'étape i') à une température inférieure à 180°C sans calcination ultérieure pour obtenir un support imprégné séché,
i‴) on imprègne le support imprégné séché obtenu à l'étape i") par une solution d'imprégnation comprenant au moins un composé organique contenant de l'oxygène et/ou de l'azote pour obtenir un précurseur catalytique imprégné,
iʺʺ) on laisse maturer le précurseur catalytique imprégné obtenu à l'étape i‴) pour obtenir ledit précurseur de catalyseur.

14. Procédé selon l'une des revendications 1 à 13, dans lequel l'effluent obtenu à l'étape a) est soumis à une étape de séparation permettant de séparer une fraction lourde et une fraction légère contenant le H₂S et le NH₃ formés lors de l'étape a), ladite fraction lourde étant ensuite introduite dans l'étape b).

## Patentansprüche

1. Verfahren zur Hydrobehandlung einer Kohlenwasserstoffcharge, die Stickstoffverbindungen in einem Anteil von mehr als 150 Gew.-ppm 5 enthält und eine gewichtete Durchschnittstemperatur im Bereich zwischen 250 und 380 °C aufweist, das die folgenden Schritte umfasst:
a) Inkontaktbringen, in Gegenwart von Wasserstoff, der Kohlenwasserstoffcharge mit mindestens einem ersten Katalysator, umfassend einen Aluminiumoxidträger, Phosphor und eine aktive Phase, gebildet aus mindestens einem Metall der Gruppe VIB in Oxidform und mindestens einem Metall der Gruppe VIII in Oxidform, wobei der erste Katalysator gemäß einem Verfahren hergestellt wird, das mindestens einen Schritt zur Kalzinierung umfasst,
b) Inkontaktbringen, in Gegenwart von Wasserstoff, des in Schritt a) erhaltenen Abflusses mit mindestens einem zweiten Katalysator, umfassend einen Aluminiumoxidträger, Phosphor und eine aktive Phase, gebildet aus mindestens einem Metall der Gruppe VIB und mindestens einem Metall der Gruppe VIII und mindestens einer organischen Verbindung, die Sauerstoff und/oder Stickstoff enthält, wobei der zweite Katalysator gemäß einem Verfahren hergestellt wird, das die folgenden Schritte umfasst:
i) Inkontaktbringen mindestens einer Komponente eines Metalls der Gruppe VIB, mindestens einer Komponente eines Metalls der Gruppe VIII, des Phosphors und mindestens einer organischen Verbindung, enthaltend Sauerstoff und/oder Stickstoff, mit dem Träger, um eine Katalysatorvorstufe zu erhalten,
ii) Trocknen der Katalysatorvorstufe aus Schritt i) bei einer Temperatur kleiner 200 °C, ohne ihn anschließend zu kalzinieren,
um einen hydrobehandelten Abfluss zu erhalten,
wobei der Schritt a) in einer ersten Zone, enthaltend den ersten Katalysator, der ein Volumen V1 einnimmt, durchgeführt wird, und Schritt b) in einer zweiten Zone, enthaltend den zweiten Katalysator, der ein Volumen V2 einnimmt, durchgeführt wird, wobei das Aufteilungsverhältnis der Volumina V1/V2 im Bereich zwischen 10 Vol.-%/90 Vol.-% bzw. 50 Vol.-%/50 Vol.-% der ersten und der zweiten Zone liegt.

2. Verfahren nach Anspruch 1, wobei für den Katalysator aus Schritt a) oder b) das Metall der Gruppe VIB Molybdän ist, und das Metall der Gruppe VIII aus Cobalt, Nickel und dem Gemisch dieser beiden Elemente ausgewählt ist.

3. Verfahren nach einem der Ansprüche 1 oder 2, wobei für den Katalysator aus Schritt a) oder b) der Anteil des Metalls der Gruppe VIB im Bereich zwischen 5 und 40 Gew.-% Metalloxid der Gruppe VIB bezogen auf das Gesamtgewicht des Katalysators liegt, der Anteil des Metalls der Gruppe VIII im Bereich zwischen 1 und 10 Gew.-% Metalloxid der Gruppe VIII bezogen auf das Gesamtgewicht des Katalysators liegt und der Phosphoranteil im Bereich zwischen 0,1 und 10 Gew.-% P2O5 bezogen auf das Gesamtgewicht des Katalysators liegt.

4. Verfahren nach einem der Ansprüche 1 bis 3, wobei der Katalysator aus Schritt a) oder b) ferner mindestens ein Dotierungsmittel, ausgewählt aus Bor und Fluor und einem Gemisch aus Bor und Fluor, enthält.

5. Verfahren nach einem der Ansprüche 1 bis 4, wobei die organische Verbindung eine oder mehrere, ausgewählt aus einer Carbonsäure, einem Alkohol, einem Aldehyd, einem Ester, einem Amin, einer Amino-Carbonsäure, einem Aminoalkohol, einem Nitril oder einem Amid, ist.

6. Verfahren nach Anspruch 5, wobei die organische Verbindung eine oder mehrere, ausgewählt aus Ethylenglycol, Glycerol, Polyethylenglycol (mit einer Molekülmasse von 200 bis 1.500), Acetophenon, 2,4-Pentandion, Pentanol, Essigsäure, Maleinsäure, Oxalsäure, Weinsäure, Ameisensäure, Citronensäure und C1-C4-Dialkylsuccinat, ist.

7. Verfahren nach Anspruch 5, wobei die organische Verbindung mindestens die Kombination aus C1-C4-Dialkylsuccinat und Essigsäure umfasst.

8. Verfahren nach Anspruch 5, wobei die organische Verbindung mindestens Citronensäure umfasst.

9. Verfahren nach einem der Ansprüche 1 bis 8, wobei der Katalysator aus Schritt a) oder b) ferner einem Schritt zur Sulfuration unterzogen wurde.

10. Verfahren nach einem der Ansprüche 1 bis 9, wobei der Anteil an basischem Stickstoff im Einsatz größer oder gleich 50 ppm ist.

11. Verfahren nach einem der Ansprüche 1 bis 10, wobei der Einsatz ein Einsatz ist, der aus dem katalytischen Cracken, einem Koker oder dem Visbreaken stammt.

12. Verfahren nach einem der Ansprüche 1 bis 11, wobei jeder der Schritte a) und b) bei einer Temperatur im Bereich zwischen 180 und 450 °C, bei einem Druck im Bereich zwischen 0,5 und 10 MPa, bei einer Raumgeschwindigkeit pro Stunde im Bereich zwischen 0,1 und 20 h-1 und mit einem Wasserstoff/Einsatz-Verhältnis, ausgedrückt als Wasserstoffvolumen, gemessen unter normalen Temperatur- und Druckbedingungen, pro Volumen flüssiger Einsatz im Bereich zwischen 50 l/l und 2.000 l/l, durchgeführt wird.

13. Verfahren nach einem der Ansprüche 1 bis 12, wobei Schritt i) aus Schritt b) die folgende Abfolge von Schritten umfasst:
i') Imprägnieren eines Aluminiumoxidträgers mit mindestens einer Lösung, enthaltend mindestens ein Metall der Gruppe VIB, mindestens ein Metall der Gruppe VIII und den Phosphor, um einen imprägnierten Träger zu erhalten,
i") Trocknen des imprägnierten Trägers, der in Schritt i') erhalten wurde, bei einer Temperatur kleiner 180 °C ohne anschließende Kalzinierung, um einen getrockneten, imprägnierten Träger zu erhalten,
i‴) Imprägnieren des getrockneten, imprägnierten Trägers, der in Schritt i") erhalten wurde, mit einer Imprägnierlösung, die mindestens eine organische Verbindung,
enthaltend Sauerstoff und/oder Stickstoff, umfasst, um eine imprägnierte katalytische Vorstufe zu erhalten,
iʺʺ) Maturieren lassen der imprägnierten katalytischen Vorstufe, die in Schritt i") erhalten wurde, um die Katalysatorvorstufe zu erhalten.

14. Verfahren nach einem der Ansprüche 1 bis 13, wobei der in Schritt a) erhaltene Abfluss einem Schritt zur Trennung unterzogen wird, der es ermöglicht, eine schwere Fraktion und eine leichte Fraktion, enthaltend H2S und NH3, gebildet in Schritt a), zu trennen, wobei die schwere Fraktion anschließend in Schritt b) eingeführt wird.

## Claims

1. A process for the hydrotreatment of a hydrocarbon feed containing nitrogen-containing compounds in an amount of more than 150 ppm by weight and having a weighted average temperature in the range 250°C to 380°C, comprising the following steps:
a) bringing said hydrocarbon feed into contact, in the presence of hydrogen, with at least one first catalyst comprising an alumina support, phosphorus, and an active phase formed by at least one metal from group VIB in the oxide form and at least one metal from group VIII in the oxide form, said first catalyst being prepared in accordance with a process comprising at least one calcining step;
b) bringing the effluent obtained in step a) into contact, in the presence of hydrogen, with at least one second catalyst comprising an alumina support, phosphorus, an active phase formed by at least one metal from group VIB and at least one metal from group VIII, and at least one organic compound containing oxygen and/or nitrogen, said second catalyst being prepared in accordance with a process comprising the following steps:
i) bringing at least one component of a metal from group VIB, at least one component of a metal from group VIII, phosphorus and at least one organic compound containing oxygen and/or nitrogen into contact with the support, so as to obtain a catalyst precursor;
ii) drying said catalyst precursor obtained from step i) at a temperature of less than 200°C, without subsequent calcining;
in order to obtain a hydrotreated effluent,
and in which step a) is carried out in a first zone containing the first catalyst which occupies a volume V1, and step b) is carried out in a second zone containing the second catalyst which occupies a volume V2, the distribution of the volumes, V1/V2, being in the range 10% by volume/90% by volume to 50% by volume/50% by volume for the first and second zone respectively.

2. The process according to claim 1 in which, for the catalyst of step a) or b), the metal from group VIB is molybdenum and the metal from group VIII is selected from cobalt, nickel and a mixture of these two elements.

3. The process according to claim 1 or claim 2 in which, for the catalyst of step a) or b), the quantity of metal from group VIB is in the range 5% to 40% by weight of oxide of the metal from group VIB with respect to the total catalyst weight, the quantity of metal from group VIII is in the range 1% to 10% by weight of oxide of the metal from group VIII with respect to the total catalyst weight, and the quantity of phosphorus is in the range 0.1% to 10% by weight of P₂O₅ with respect to the total catalyst weight.

4. The process according to one of claims 1 to 3, in which the catalyst of step a) or b) further contains at least one dopant selected from boron and fluorine and a mixture of boron and fluorine.

5. The process according to one of claims 1 to 4, in which the organic compound is one or more selected from a carboxylic acid, an alcohol, an aldehyde, an ester, an amine, an aminocarboxylic acid, an aminoalcohol, a nitrile or an amide.

6. The process according to claim 5, in which the organic compound is one or more selected from ethylene glycol, glycerol, polyethylene glycol (with a molecular weight of 200 to 1500), acetophenone, 2,4-pentanedione, pentanole, acetic acid, maleic acid, oxalic acid, tartaric acid, formic acid, citric acid and C1-C4 dialkyl succinate.

7. The process according to claim 5, in which the organic compound comprises at least the combination of C1-C4 dialkyl succinate and acetic acid.

8. The process according to claim 5, in which the organic compound comprises at least citric acid.

9. The process according to one of claims 1 to 8, in which the catalyst of step a) or b) has also undergone a sulphurizing step.

10. The process according to one of claims 1 to 9, in which the quantity of basic nitrogen in the feed is 50 ppm or more.

11. The process according to one of claims 1 to 10, in which the feed is a feed obtained from catalytic cracking, a coker or from visbreaking.

12. The process according to one of claims 1 to 11, in which each of steps a) and b) is carried out at a temperature in the range 180°C to 450°C, at a pressure in the range 0.5 to 10 MPa, at an hourly space velocity in the range 0.1 to 20 h⁻¹ and with a hydrogen/feed ratio, expressed as the volume of hydrogen measured under normal temperature and pressure conditions, per volume of liquid feed in the range 50 L/L to 2000 L/L.

13. The process according to one of claims 1 to 12, in which step i) of step b) comprises the following steps in succession:
i') impregnating an alumina support with at least one solution containing at least one metal from group VIB, at least one metal from group VIII and said phosphorus in order to obtain an impregnated support;
i") drying the impregnated support obtained in step i') at a temperature of less than 180°C without subsequent calcining in order to obtain a dried impregnated support;
i‴) impregnating the dried impregnated support obtained in step i") with an impregnation solution comprising at least one organic compound containing oxygen and/or nitrogen in order to obtain an impregnated catalytic precursor;
iʺʺ) allowing the impregnated catalytic precursor obtained in step i‴) to mature, in order to obtain said catalyst precursor.

14. The process according to one of claims 1 to 13, in which the effluent obtained in step a) undergoes a separation step in order to separate a heavy fraction and a light fraction containing the H₂S and NH₃ formed during step a), said heavy fraction then being introduced into step b).
